# EUROPEAN PATENT SPECIFICATION

(11) **EP 2 937 853 B1**
(45) Date of publication and mention of the grant of the patent: **16.12.2020**
(21) Application number: 15159338.1
(22) Date of filing: 17.03.2015
(51) Int. Cl.: G09F 15/00, F16B 2/24, F16B 5/06

(54) **TENTERHOOK FOR TIGHTENING A CLOTH PROVIDED WITH FIXING EYES IN A TENTER**
SPANNHAKEN ZUM ANZIEHEN EINES TUCHS MIT BEFESTIGUNGSÖSEN IN EINEM SPANNRAHMEN
GOND D'EMBRASSE POUR SERRER UN TISSU DOTÉ D' ILLETS DE FIXATION DANS UNE RAME CONTINUE

(30) Priority: 19.03.2014 NL 2012481
(43) Date of publication of application: 28.10.2015
(73) Proprietor: Antares Beheersmaatschappij BV, 5551 ZH Valkenswaard (NL)
(72) Inventor: Snel, Hubertus Antonius Johannes, 5551 ZH Valkenswaard (NL)
(74) Representative: Verhees, Godefridus Josephus Maria

(56) References cited:
- EP-A1- 0 678 842
- NL-C- 2 004 983
- US-B2- 8 561 330

## Description

### Field of the invention

The invention is defined in claim 1. It relates to a stretching hook for stretching an eyelet-containing canvas in a stretch frame, comprising a hook arranged as a bent object one of the eyelets can be caught on and a coupling element fixed to it for coupling the stretching hook to the stretch frame, which coupling element comprises a first planar part which has a first end and by means of which the first part is connected to the hook, as well as a second planar part of which a first end is fixed to a second end of the first part and includes with the first part an angle of less than 90 degrees, so that a second end of the second part is present distal from the first end of the first part, where at least one of the planar parts and/or the connection between the two planar parts is resilient, and where the hook extends in a plane that is perpendicular to the planes in which the first and second parts extend, which stretching hook further comprises a planar connecting component of which a first end is attached to the hook and of which a second end is connected to the first end of the first part of the coupling element and which includes a further angle with the first part, where the first part and/or the connecting component and/or the connection between said two parts is resilient.

### State of the art

A stretching hook of this type is known from NL-A-2004983. Owing to its shape this known stretching hook is restricted to application in a stretch frame that is comprised of profiles that have a cross section suitable for coupling the stretching hook to.

### Summary of the invention

It is an object of the invention to provide a stretching hook of the type defined in the opening paragraph which has a wider field of application and renders more freedom to the design of the stretch frame. For this purpose the stretching hook according to the invention is characterized in that the connecting component is connected via at least one coil spring to the first planar part of the coupling element, and in that the second part of the coupling element has a shape of a right-angled triangle where the hypothenuse forms the first end by which the second part is connected to the first part of the coupling element and the angular point of the base and perpendicular forms the second end. Since the hook is connected resiliently and at an angle to the coupling element, the stretching hook according to the invention is less restricted in its field of application than the known stretching hook and may be installed not only in a hollow frame tube but also in a profile suitable for this purpose. The stretching hook according to the invention can be fitted well in a corner of the stretch frame and can adopt a stable position in a square corner of the stretch frame.

From US 8 561 330 a mounting spring for tautly mounting a flexible material sign is known, comprising a base portion adapted to be secured to an associated sign structure, a grasping portion including a finger adapted to be received within an aperture of the flexible material sign; and a spring portion disposed between said base portion and said grasping portion for applying a tension to the flexible material sign. Said grasping portion includes a looped portion for applying a tension force on siad grasping portion and said spring portion is a coiled spring portion.

From EP 0 678 842 a tension panel is known having a frame, stretching and fixing means attached to the frame, and retaining means for retaining the corners of a display sheet. The stretching and fixing means exerts tension on the retaining means such that the tension is directed outwardly from the display sheet in the extending directions of imaginary lines each of which divides the interior angle of each corner of the display sheet into two, whereby the retaining means is fixed, being stretched.Two arms, which are connected to each other with a hinge, are respectively attached to a frame by means of hinges. A bent leaf spring having a hook at the leading end thereof is attached to either of the arms and a member for retaining a corner of a poster is hooked over the hook, such that the poster supported in the frame remains flat and crease-free, despite changes in temperature or humidity.

A preferred embodiment of the stretching hook according to the invention is characterized in that the stretching hook is formed from a single threaded piece.

The invention further relates to a canvas stretch device for stretching an eyelet-containing canvas, comprising a stretch frame as well as frame-coupled stretching hooks as claimed in any one of the preceding claims, which stretch frame comprises a profile of a longitudinally constant cross section, where at least part of the cross section has a V-shape between which the stretching hooks are resiliently clamped between the first and second parts of the coupling element, and where either of the legs of the V-shape on the side facing the other leg is provided with a protrusion the second end of the second part of the coupling element catches on. After the two parts of the coupling element have been pressed into the V-shaped part of the profile, the parts will spring away from each other and the second part will catch with the second end on the raised edge formed by the protrusion of the profile, so hat the stretching hook is locked in the profile.

### Brief description of the drawings

The invention will be described below in more detail based on an example of embodiment of an invented canvas stretch device represented in the drawing figures with a stretching hook, in which:
Fig. 1 shows the canvas stretch device accommodating a canvas-cum-partly-omitted canvas;
Fig. 2 shows a cross sectional view of the canvas stretch device shown in Fig. 1;
Fig. 3 shows a profile of the frame of the canvas stretch device with a stretching hook locked in the profile;
Fig. 4 shows a cross-sectional view of the frame with stretching hook shown in Fig. 3;
Fig. 5 shows a detail of the cross sectional view of the canvas stretch device shown in Fig. 2;
Fig. 6 shows a longitudinal view of the detail of the canvas stretch device shown in Fig. 5; and
Fig. 7 shows a top view of the separate stretching hook.

### Detailed description of the drawings

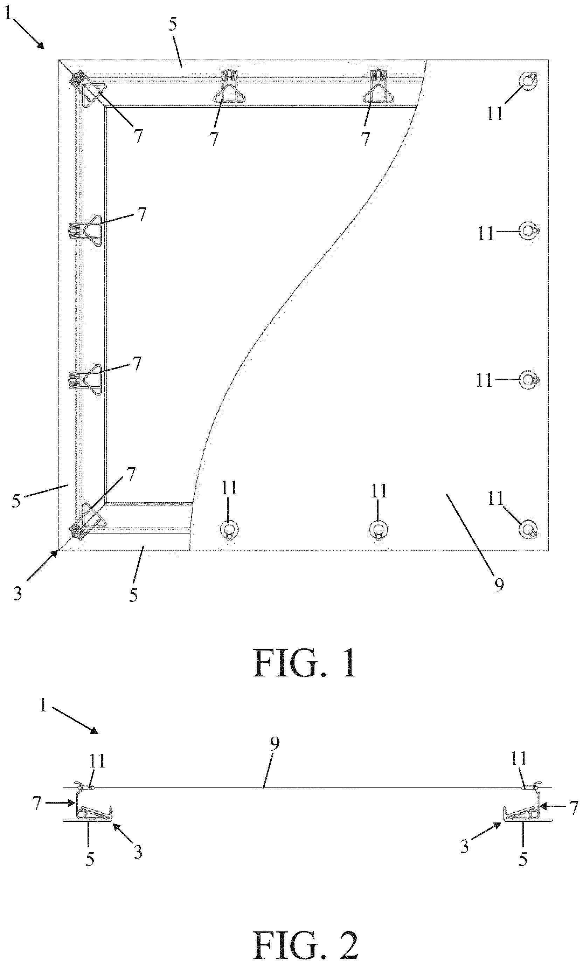

Fig. 1 shows an embodiment of the canvas stretch device according to the invention. The canvas stretch device 1 is comprised of a stretch frame 3 made of four profiles 5 and a plurality of stretching hooks 7 which are locked in the profiles. A canvas 9 is stretched in the stretch frame. Along the periphery the canvas is provided with eyelets 11 spaced apart from each other and by which the canvas is caught on the stretching hooks. By way of illustration Fig. 2 shows the canvas stretch device in a cross sectional view.

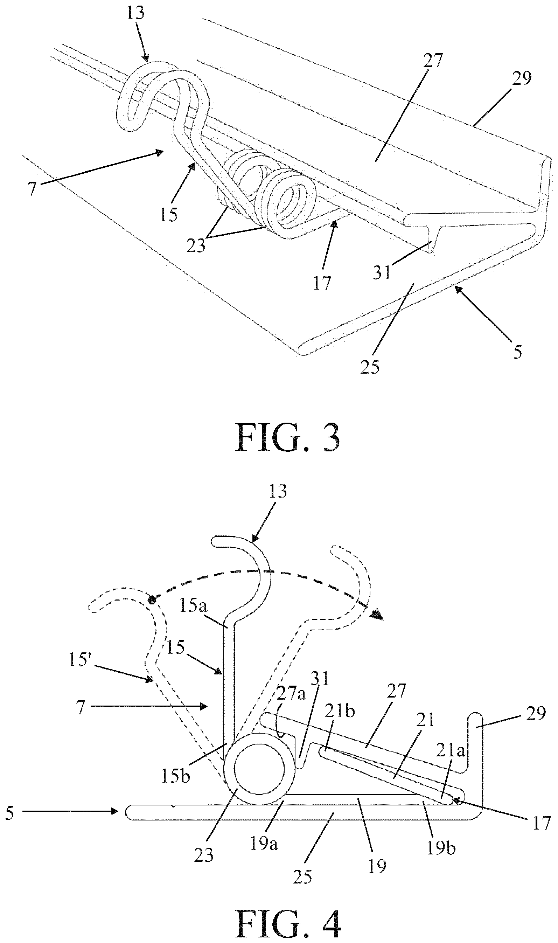

The stretching hook 7 (see Figs. 3-7) is formed from a single threaded piece and comprises a hook 13 and a coupling element 17 resiliently connected to the hook via a connecting component 15. This coupling element is formed by a first planar part 19 of which a first end 19a is connected to the connecting component 15, and a second planar part 21 of which a first end 21a is resiliently connected to the second end 19b of the first part.

The second part 21 includes with the first part 19 an angle of less than 90 degrees (see Fig. 4), so that the second end 21b of the second part is distal from the first end 19a of the first part. The two parts 19 and 21 as well as the connection between these two parts are resilient. The hook 13 extends in a plane that is perpendicular to the planes in which the first and second parts extend.

The connecting component 15 is attached with a first end 15a to the hook 13 and with a second end 15b via two coil springs 23 to the first end 19a of the first part of the coupling element. The connecting component 15, in untensioned state of the coil spring (the position in Fig. 4 indicated by broken lines 15'), includes a further angle of more than 90 degrees with the first part 19 of the coupling element.

The profiles 5 of the stretch frame 3 have a cross section that remains constant over its length (see Figs. 3 and 4) and are formed by two strips 25 and 27 present at an angle relative to each other and fitted to each other over a longitudinal raised edge. The profiles 5 may also have a raised edge 29 if desired. The cross section of the strip 27 and of part of the strip 25 has a V-shape. The stretching hooks 7 resiliently clamped with the first and second parts 19 and 21 of the coupling element 17 are present between the strips 25 and 27. On the side 27a of the strip 27 oriented to the strip 25 there is a projecting edge 31 caught by the second end 21b of the second part 21 of the coupling element 17.

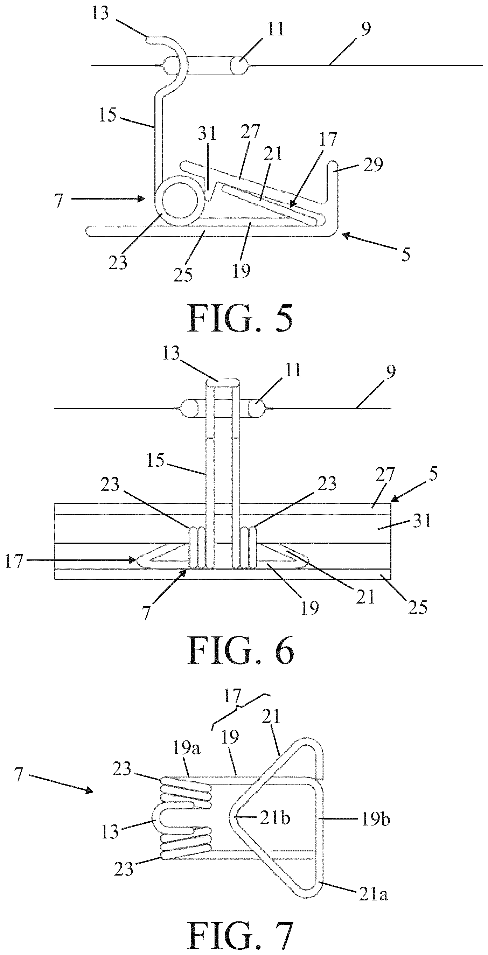

By way of illustration Fig. 5 shows a detail of the cross sectional view shown in Fig. 2 of the canvas stretch device and Fig. 6 shows a longitudinal section of the detail of the canvas stretch device shown in Fig. 5.

The second part 21 of the coupling element 17 has a triangular shape (see Fig. 7), where one of the triangle sides forms the first end 21a by which the second part 21 is connected to the first part 19 of the coupling element. This form is a right-angle triangle where the hypothenuse forms the first end and the angular point of the two legs forms the second end 21b of the second part 21.

Albeit the invention has been described in the foregoing based on the drawing figures, it should be observed that the invention is not by any manner or means restricted to the embodiment shown in the drawing figures. The invention also extends to all embodiments deviating from the embodiment shown in the drawing figures within the scope defined by the claims.

## Claims

1. A stretching hook (7) for stretching an eyelet-containing canvas (9) in a stretch frame (3), comprising a hook (13) arranged as a bent object one of the eyelets (11) can be caught on and a coupling element (17) fixed to it for coupling the stretching hook to the stretch frame, which coupling element comprises a first planar part (19) which has a first end (19a) and by means of which the first part is connected to the hook, as well as a second planar part (21) of which a first end (21a) is fixed to a second end (19b) of the first part and includes with the first part an angle of less than 90 degrees, so that a second end (21b) of the second part is present distal from the first end (19a) of the first part, where at least one of the planar parts (19,21) and/or the connection between the two planar parts is resilient, and where the hook (13) extends in a plane that is perpendicular to the planes in which the first and second parts extend, which stretching hook (7) further comprises a planar connecting component (15) of which a first end (15a) is attached to the hook (13) and of which a second end (15b) is connected to the first end (19a) of the first part (19) of the coupling element (17) and which includes a further angle with the first part (19), where the first part (19) and/or the connecting component (15) and/or the connection between said two parts is resilient, **characterized in that** the connecting component (15) is connected via at least one coil spring (23) to the first planar part (19) of the coupling element (17), and **in that** the second part (21) of the coupling element (17) has a shape of a right-angled triangle where the hypothenuse forms the first end (21a) by which the second part (21) is connected to the first part (19) of the coupling element and the angular point of the base and perpendicular forms the second end (21b).

2. A stretching hook as claimed in any one of the preceding claims, **characterized in that** the stretching hook (7) is formed from a single threaded piece.

3. A canvas stretch device (1) for stretching an eyelet-containing canvas (9), comprising a stretch frame (3) as well as frame-coupled stretching hooks (7) as claimed in any one of the preceding claims, which stretch frame comprises a profile (5) of a longitudinally constant cross section, where at least part of the cross section has a V-shape between which the stretching hooks (7) are resiliently clamped between the first and second parts (19,21) of the coupling element (17), and where either of the legs (25,27) of the V-shape on the side facing the other leg is provided with a protrusion (31) which the second end (21b) of the second part (21) of the coupling element catches on.

## Patentansprüche

1. Ein Spannhaken (7) zum Dehnen einer Ösen enthaltenden Leinwand (9) in einem Dehnungsrahmen (3), der einen Haken (13) umfasst, der als gebogener Gegenstand angeordnet ist, an dem eine der Ösen (11) aufgefangen werden kann und ein daran befestigtes Kupplungselement (17) zum Koppeln des Streckhakens mit dem Streckrahmen, wobei das Kupplungselement einen ersten ebenen Teil (19) umfasst, der ein erstes Ende (19a) aufweist und über den der erste Teil mit dem Haken verbunden ist sowie einen zweiten planaren Teil (21), von dem ein erstes Ende (21a) an einem zweiten Ende (19b) des ersten Teils befestigt ist und mit dem ersten Teil einen Winkel von weniger als 90 Grad aufweist, so dass ein zweites Ende (21b) des zweiten Teils distal vom ersten Ende (19a) des ersten Teils anliegt, wobei mindestens einer der planaren Teile (19, 21) und/oder die Verbindung zwischen den beiden planaren Teilen elastisch ist, und wobei sich der Haken (13) in einer Ebene erstreckt, die senkrecht zu den Ebenen ist, in denen sich der erste und der zweite Teil erstrecken, wobei der Spannhaken (7) ferner einen planare Verbindungskomponente (15) umfasst, von der ein erstes Ende (15a) an dem Haken (13) angebracht ist und von der ein zweites Ende (15b) mit dem ersten Ende (19a) des ersten Teils (19) des Kupplungelements (17) verbunden ist und das einen weiteren Winkel mit dem ersten Teil (19) einschließt, wobei der erste Teil (19) und/oder die Verbindungskomponente (15) und/oder die Verbindung zwischen den beiden Teilen elastisch ist, **dadurch gekennzeichnet, dass** die Verbindungskomponente (15) über mindestens eine Schraubenfeder (23) mit dem ersten ebenen Teil (19) des Kupplungselements (17) verbunden ist, und der zweite Teil (21) des Kupplungselements (17) einen Form eines rechtwinkligen Dreiecks hat, bei dem die Hypothenuse das erste Ende (21a) bildet, durch das der zweite Teil (21) mit dem ersten Teil (19) des Kopplungselements verbunden ist, und der Winkelpunkt der Basis und die Senkrechte das zweite Ende (21b) bildet.

2. Spannhaken, wie in einem der vorhergehenden Ansprüche beansprucht, **dadurch gekennzeichnet, dass** der Spannhaken (7) aus einem einzelnen Gewindestück gebildet ist.

3. Leinwanddehnungsvorrichtung (1) zum Dehnen einer Ösen enthaltenden Leinwand (9), umfassend einen Dehnungsrahmen (3) sowie rahmengekoppelte Spannhaken (7), wie in einem der vorhergehenden Ansprüche beansprucht, wobei die Dehnungsrahmen ein Profil (5) umfasst mit einem in Längsrichtung konstanten Querschnitt, wobei mindestens ein Teil des Querschnitts eine V-Form aufweist, zwischen denen die Spannhaken (7) elastisch festgeklemmt sind zwischen dem ersten und dem zweiten Teil (19, 21) von das Kupplungselement (17), und wobei eines der Beine (25, 27) der V-Form auf der dem anderen Bein zugewandten Seite mit einem Vorsprung (31) versehen ist, der das zweite Ende (21b) des zweiten Teils (21) des Kupplungselements einrastet.

## Revendications

1. Crochet d'étirement (7) pour étirer une toile contenant des œillets (9) dans un cadre extensible (3), comprenant un crochet (13) agencé comme un objet plié sur lequel l'un des œillets (11) peut être accroché et un élément d'accouplement (17) qui lui est fixé pour accoupler le crochet d'étirement au cadre extensible, lequel élément d'accouplement comprend une première partie plane (19) qui a une première extrémité (19a) et au moyen de laquelle la première partie est reliée au crochet, ainsi qu'une seconde partie plane (21) dont une première extrémité (21a) est fixée à une seconde extrémité (19b) de la première partie et comprend avec la première partie un angle inférieur à 90 degrés, de sorte qu'une seconde l'extrémité (21b) de la deuxième partie est présente distale de la première extrémité (19a) de la première partie, où au moins l'une des parties planes (19, 21) et/ou la connexion entre les deux parties planes est élastique, et où le crochet (13) s'étend dans un plan qui est perpendiculaire aux plans dans lesquels s'étendent les première et seconde parties, lequel crochet d'étirement (7) comprend en composant de liaison lanaire (15) dont une première extrémité (15a) est fixée au crochet (13) et dont une seconde extrémité (15b) est connectée à la première extrémité (19a) de la première partie (19) de l'accouplement élément (17) et qui comprend un autre angle avec la première partie (19), où la première partie (19) et/ou le composant de connexion (15) et/ou la connexion entre lesdites deux parties est élastique, **caractérisé en ce que** le le composant de connexion (15) est connecté via au moins un ressort hélicoïdal (23) à la première partie plane (19) de l'élément de couplage (17), et **en ce que** la seconde partie (21) de l'élément de couplage (17) a une forme d'un triangle rectangle où l'hypothénuse forme la première extrémité (21a) par laquelle la seconde partie (21) est reliée à la première partie (19) de l'élément d'accouplement et le point angulaire de la base et perpendiculaire forme la seconde fin (21b).

2. Crochet d'étirement selon l'une quelconque des revendications précédentes, **caractérisé en ce que** le crochet d'étirement (7) est formé d'une seule pièce filetée.

3. Dispositif d'étirement de toile (1) pour étirer une toile contenant des œillets (9), comprenant un cadre extensible (3) ainsi que des crochets d'étirement (7) couplés à un cadre selon l'une quelconque des revendications précédentes, qui s'étirent. le cadre comprend un profil (5) de section transversale longitudinalement constante, où au moins une partie de la section transversale a une forme en V entre laquelle les crochets d'étirement (7) sont serrés élastiquement entre les première et seconde parties (19, 21) l'élément d'accouplement (17), et où l'une ou l'autre des branches (25, 27) en forme de V sur le côté faisant face à l'autre branche est pourvue d'une saillie (31) dont la seconde extrémité (21b) de la seconde partie (21) de l'élément d'accouplement s'enclenche.
